# EUROPEAN PATENT APPLICATION

(11) **EP 4 579 189 A1**
(43) Date of publication of application: **02.07.2025**
(21) Application number: 23856554.3
(22) Date of filing: 18.08.2023
(51) Int. Cl.: G01C 21/00

(54) **LOOP-BACK PATH PREDICTION METHOD AND APPARATUS, NONVOLATILE STORAGE MEDIUM, AND PROCESSOR**

(30) Priority: 22.08.2022 CN 202211007262
(71) Applicant: Shining 3D Tech Co., Ltd., Hangzhou, Zhejiang 311258 (CN)
(72) Inventor: HUA, Yunfeng, Hangzhou, Zhejiang 311258 (CN); JIANG, Tengfei, Hangzhou, Zhejiang 311258 (CN); XU, Weiwei, Hangzhou, Zhejiang 311258 (CN)
(74) Representative: Dehns Germany Partnerschaft mbB
(86) International application number: PCT/CN2023/113875
(87) International publication number: WO 2024/041464

(57) **Abstract**

Disclosed are a method and apparatus for predicting a loop closure path, a non-transitory storage medium, and a processor. The method comprises: detecting, in the process of simultaneous localization and mapping, whether a scanning movement trajectory of a scanning device has not passed through a start position on a scanning path for a second time within a preset duration; and predicting a loop closure path when it is detected that the scanning movement trajectory of the scanning device has not passed through the start position for the second time within the preset duration.

## Description

### Technical Field

The present disclosure relates to the technical field of loop closure detection, and in particular, to a method and apparatus for predicting a loop closure path, a non-transitory storage medium, and a processor.

### Background

In the process of simultaneous localization and mapping, the constraint of pose of a current frame is calculated according to a previous frame, and due to an error in a calculated pose, a constructed map easily drifts along with continuous accumulation of errors in the mapping process. Therefore, it is necessary to judge, via loop closure detection, whether a scanner passes through the same position again in the mapping process, and perform loop closure correction if the scanner passes through the same position, so as to reduce a mapping deviation. However, in practical applications, a user does not intentionally perform loop closure scanning, and if the loop closure scanning cannot be completed, results of the simultaneous localization and mapping will be inaccurate.

In view of the problems above, no effective solution has been proposed.

### Summary

Embodiments of the present disclosure provide a method and apparatus for predicting a loop closure path, a non-transitory storage medium, and a processor, so as to at least solve the technical problem of an inaccurate result of simultaneous localization and mapping caused by lack of a loop closure path prediction function and a loop closure reminding function.

According to an aspect of embodiments of the present disclosure, provided is a method for predicting a loop closure path, including: in the process of simultaneous localization and mapping, it is detected whether a scanning movement trajectory of a scanning device has not passed through a start position on a scanning path for a second time within a preset duration; and a loop closure path is predicted when it is detected that the scanning movement trajectory of the scanning device has not passed through the start position for the second time within the preset duration.

Alternatively, when it is detected that the scanning movement trajectory of the scanning device has not passed through the start position for the second time within the preset duration, prompt information is generated.

Alternatively, the loop closure path is predicted, includes: a first loop closure path and/or a second loop closure path is/are predicted; wherein the first loop closure path is a global loop closure path, and the second loop closure path is a local loop closure path.

Alternatively, the first loop closure path is predicted, includes: a first position of the scanning device corresponding to a current frame is acquired, and the first position is taken as a first end point of the first loop closure path; wherein the current frame is a corresponding frame when the scanning device generates the prompt information in the scanning process; the start position is acquired, and the start position is taken as a second end point of the first loop closure path; and the first loop closure path is generated according to the first end point and the second end point of the first loop closure path.

Alternatively, the second loop closure path is predicted, includes: the first position is taken as a first end point of the second loop closure path; a second position of which the distance from the first position is a target distance is acquired, and the second position is taken as a second end point of the second loop closure path; and the second loop closure path is generated according to the first end point and the second end point of the second loop closure path.

Alternatively, the second position is not on a target path; wherein the target path is a path that the scanning device passes through a target position at least once, and the target position is a position other than the start position and a position of which the distance from the start position is the target distance.

Alternatively, in the process of the simultaneous localization and mapping, in response to detecting the generation of the local loop closure path, all frames in the detected local loop closure path are marked as loop closure frames; and when the scanning device finishes scanning, in response to detecting that there is a frame other than the loop closure frames, the prompt information is generated.

Alternatively, after the loop closure path is predicted, the method further includes: the loop closure path is displayed; and/or the scanning device is controlled to move according to the loop closure path.

According to another aspect of embodiments of the present disclosure, further provided is an apparatus for predicting a loop closure path, comprising: a detection component, configured to detect, in the process of simultaneous localization and mapping, whether a scanning movement trajectory of a scanning device has not passed through a start position on a scanning path for a second time within a preset duration; and a prediction component, configured to predict a loop closure path when it is detected that the scanning movement trajectory of the scanning device has not passed through the start position for the second time within the preset duration.

According to still another aspect of embodiments of the present disclosure, further provided is a non-transitory storage medium, including a stored program, wherein when running, the program controls a device where the storage medium is located to execute the described method for predicting a loop closure path.

According to still another aspect of embodiments of the present disclosure, further provided is a processor, the processor being configured to run a program stored in a memory; wherein when running, the program executes the described method for predicting a loop closure path.

In embodiments of the present disclosure, by using a method in which in the process of simultaneous localization and mapping, it is detected whether a scanning movement trajectory of a scanning device has not passed through a start position on a scanning path for a second time within a preset duration; and a loop closure path is predicted when it is detected that the scanning movement trajectory of the scanning device has not passed through the start position for the second time within the preset duration, by predicting the loop closure path and generating prompt information, the purpose of prompting a user to complete loop closure detection is achieved, thereby achieving the technical effect of acquiring a more accurate result of simultaneous localization and mapping, further solving the technical problem of an inaccurate result of simultaneous localization and mapping caused by lack of a loop closure path prediction function and a loop closure reminding function.

### Brief Description of the Drawings

The drawings illustrated herein are used for providing further understanding of the present disclosure and constitute a part of the present disclosure, and the illustrative embodiments of the present disclosure and illustrations thereof are used for explaining the present disclosure, rather than constituting inappropriate limitation on the present disclosure. In the drawings:
Fig. 1 is a flowchart of a method for predicting a loop closure path according to embodiments of the present disclosure;
Fig. 2 is a schematic diagram of difference between the existence of loop closure optimization and the absence of loop closure optimization according to embodiments of the present disclosure;
Fig. 3 is a structural diagram of a global loop closure and a local loop closure according to embodiments of the present disclosure;
Fig. 4 is a schematic diagram of a global loop closure path and a local loop closure path according to embodiments of the present disclosure; and
Fig. 5 is a structural diagram of an apparatus for predicting a loop closure path according to embodiments of the present disclosure.

### Detailed Description of the Embodiments

In order to enable a person skilled in the art to understand the solutions of the present disclosure better, hereinafter, the technical solutions in the embodiments of the present disclosure will be described clearly and thoroughly with reference to the accompanying drawings of embodiments of the present disclosure. Obviously, the embodiments as described are only some of embodiments of the present disclosure, and are not all the embodiments. On the basis of the embodiments in the present disclosure, all other embodiments obtained by a person of ordinary skill in the art without any inventive effort shall all fall within the scope of protection of the present disclosure.

It should be noted that the terms "first", "second" etc. in the description, claims, and accompanying drawings of the present disclosure are used to distinguish similar objects, and are not necessarily used to describe a specific sequence or order. It should be understood that the data so used may be interchanged where appropriate so that embodiments of the present disclosure described herein may be implemented in sequences other than those illustrated or described herein. In addition, terms "include" and "have" and any variations thereof are intended to cover a non-exclusive inclusion, for example, a process, method, system, product or device which includes a series of steps or units is not necessarily limited to those steps or units that are clearly listed, but may include other steps or units that are not clearly listed or inherent to these process, method, product or device.

According to embodiments of the present disclosure, provided are embodiments of a method for displaying a loop closure path. It should be noted that the steps illustrated in the flowchart of the drawings can be executed in a computer system such as a set of computer-executable instructions, and although a logical order is shown in the flowchart, in some cases, the steps shown or described can be executed in a different order from that described herein.

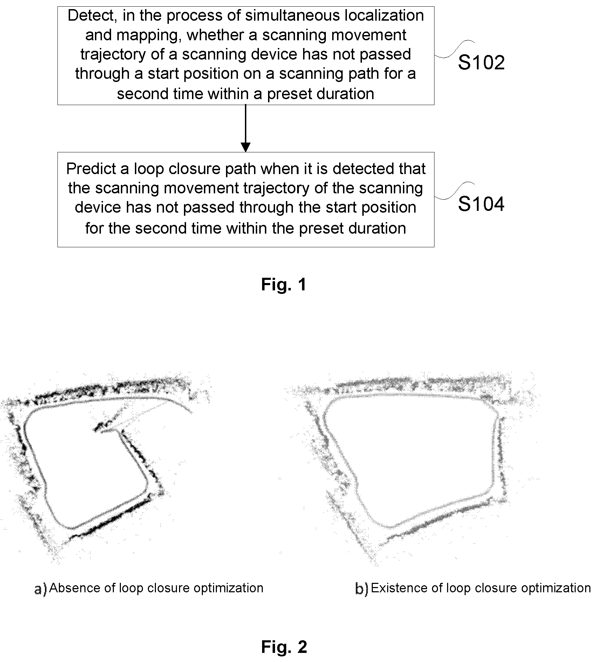

Fig. 1 is a flowchart of a method for predicting a loop closure path according to embodiments of the present disclosure. The method includes the following steps:
step S102, in the process of simultaneous localization and mapping, it is detected whether a scanning movement trajectory of a scanning device has not passed through a start position on a scanning path for a second time within a preset duration.

According to some alternative embodiments of the present disclosure, simultaneous localization and mapping is a concept: a robot and/or a scanner are expected to start from an unknown place in an unknown environment, position and posture of the robot/scanner themselves are localized in a motion process by repeatedly observed map features (such as wall corners, columns, etc.), and then a map is constructed in an incremental manner according to the position of the robot/scanner themselves, thereby achieving the purpose of simultaneous localization and mapping. Detecting whether the scanning device has passed through the start position on the scanning path for the second time is loop closure detection in the process of localization and mapping. The loop closure detection judges whether the robot and/or scanner has/have returned to a previously passed position, and in response to detecting loop closure, the robot and/or scanner transfers information to a backend for optimization processing. In visual synchronous localization and mapping, estimation of a pose is usually a recursive process, i.e. the current frame pose is solved by a previous frame pose, so the error therein is transferred in this way frame by frame, i.e. cumulative error commonly referred to. One effective method to eliminate the error is to perform loop closure detection. The loop closure is a more compact and accurate constraint than the back end, and this constraint condition can form a topology-consistent trajectory map. In response to that a closed loop can be detected and optimized, the result can be made more accurate.

The loop closure detection includes, but is not limited to, the following methods:
1. Loop closure is detected by pictures: a loop closure detection method, which is popular in a current synchronous localization and mapping system, is a method of combining feature points with bag-of-words (such as ORB-SLAM, VINS-Mono). A bag-of-words-based method includes: a bag-of-words trie is pre-loaded, and the pre-loaded trie is notified of converting a descriptor of each local feature point in an image into a word, wherein the dictionary contains all the words; and a bag-of-words vector is calculated for words of the whole image, wherein a distance between bag-of-words vectors represents the difference between two images. In an image retrieval process, key frames having the same words as the current frame are first found by using an inverted index method; and similarities between the key frames and the current frame are calculated according to bag-of-words vectors of the key frames, image frames with insufficient similarities are eliminated, and the remaining key frames are taken as candidate key frames, and the candidate key frames are sorted from near to far according to the distances of the bag-of-words vectors. A visual feature descriptor is highly related to environmental appearance. The appearance is greatly affected by illumination, and changes over time; therefore, a visual feature map usually has a short time effect.
2. Laser synchronous localization and mapping (laser slam), in which loop closure detection is performed for a point cloud: first, Scan Context/LiDAR Iris is used for performing loop closure frame detection, and after loop closure frames in historical frames are determined, point cloud registration is performed between the loop closure frames and a current point cloud frame to acquire a precise loop closure pose. The essence of loop closure detection is to perform similarity detection between a current point cloud and historical point clouds, and in a case that there is a corresponding point cloud having a relatively high similarity in the historical point clouds, this historical frame will be determined as a loop closure frame, and registration is performed between the current point cloud and the historical frame so as to obtain a precise pose; and due to the existence of cumulative error, a laser odometer continuously calculates that there is a certain deviation between the pose of the current moment and the pose of the historical moment, whereas the loop closure detection does not have a cumulative error.
3. A global positioning system is used to assist in loop closure detection: according to information provided by the global positioning system, the distance between the current position and the position of a previous frame i is judged; in a case that the distance is less than a set threshold, similarity detection is performed on the current frame and the ith frame; and in a case that the similarity is greater than a certain threshold, the ith frame is determined as a loop closure frame.

As some other alternative embodiments of the present disclosure, the scanner is a handheld scanner, and in the process of simultaneous localization and mapping by using the handheld scanner, loop closure detection is also necessary, and a loop closure path is predicted when no loop closure is detected, and relevant prompt information is generated. When a user uses the handheld scanner to scan in a large-scale scene (for example, scenes on the order of hundreds of meters such as an underground parking lot, a road, a staircase, a room, a whole building, and a residence community), the handheld scanner generates a large number of frames in the scanning process, and a three-dimensional model of the large-scale scene can be reconstructed according to these large number of frames. In the process of using the handheld scanner to perform simultaneous localization and mapping, the user may add a global positioning apparatus in the handheld scanner, and may also use a global positioning system installed in the user's mobile phone or vehicle to perform signal transmission with the handheld scanner. The user may move in a large-scale scene by walking or a vehicle.

The handheld scanner may include one or more of: a camera, an inertial navigation, the global positioning apparatus, and a series of sensor elements, and the handheld scanner may be calibrated before being used.

Step S104, a loop closure path is predicted when it is detected that the scanning movement trajectory of the scanning device has not passed through the start position for the second time within the preset duration.

According to some other alternative embodiments of the present disclosure, in the process of simultaneous localization and mapping, in a case that the site is large, loop closure detection can significantly improve the quality of reconstruction. Hence, when the user uses a lidar scanner to scan, in a case that the working duration exceeds a preset duration and it is detected that loop closure has not been completed, it is necessary to predict a loop closure path. When it is not detected that the scanning device has passed through the start position for the second time within the preset duration, that is, it is not detected that the scanning device has completed the loop closure within the preset duration, a loop closure path is predicted.

According to the described steps, by predicting the loop closure path and generating prompt information, the purpose of prompting a user to complete loop closure detection is achieved, thereby achieving the technical effect of acquiring a more accurate result of simultaneous localization and mapping, further solving the technical problem of an inaccurate result of simultaneous localization and mapping caused by lack of a loop closure path prediction function and a loop closure reminding function.

In some alternative embodiments of the present disclosure, when it is detected that the scanning movement trajectory of the scanning device has not passed through the start position for the second time within the preset duration, prompt information is generated.

As some other alternative embodiments of the present disclosure, in response to founding that the scanning time has exceeded the preset duration and no loop closure has been detected, the user will be prompted: a loop closure needs to be formed in a case that high reconstruction precision is desired. In response to founding that a local loop closure has been formed, all frames within the loop closure are marked as loop closure frames. When finally ending scanning by the user, in response to founding that there are frames that have not formed a loop closure, then the user is prompted: there are some areas that have not formed a loop closure, do you want to end the scanning?

According to some alternative embodiments of the present disclosure, the loop closure path is predicted, includes the following step: a first loop closure path and/or a second loop closure path is/are predicted; wherein the first loop closure path is a global loop closure path, and the second loop closure path is a local loop closure path.

According to some other alternative embodiments of the present disclosure, the global loop closure is a loop closure formed when the scanner passes through the start position for the second time, and the local loop closure is a loop closure formed by the scanner but the loop closure is not a loop closure formed when the scanner passes through the start position for the second time. The present disclosure can predict and guide a user to complete a loop closure according to a global loop closure path that may form a global loop closure or a local loop closure path that may form a local loop closure.

In some embodiments of the present disclosure, the first loop closure path is predicted, can be implemented by the following method: a first position of the scanning device corresponding to a current frame is acquired, and the first position is taken as a first end point of the first loop closure path; wherein the current frame is a corresponding frame when the scanning device generates the prompt information in the scanning process; the start position is acquired, and the start position is taken as a second end point of the first loop closure path; and the first loop closure path is generated according to the first end point and the second end point of the first loop closure path.

As some other alternative embodiments of the present disclosure, a frame generated when the user receives reminding information is a current frame, and the current frame is taken as a start point of the global loop closure path; wherein the frame where the start position of the user is located, i.e. the earliest frame (a frame not marked as a loop closure frame), serves as an end point of the global loop closure path. A feasible path for selection by the user is generated according to the start point of the global loop closure path and the end point of the global loop closure path.

In some alternative embodiments of the present disclosure, the second loop closure path is predicted, is implemented by the following method: the first position is taken as a first end point of the second loop closure path; a second position of which the distance from the first position is a target distance is acquired, and the second position is taken as a second end point of the second loop closure path; and the second loop closure path is generated according to the first end point and the second end point of the second loop closure path.

As some other alternative embodiments of the present disclosure, a frame generated when the user receives reminding information is a current frame, and the current frame is taken as a start point of the local loop closure path; and a previous frame at a set distance from the current frame is acquired according to the current position of the user, wherein a time difference between the previous frame and the current frame is also greater than a set threshold, the previous frame is not marked as a loop closure frame, and the previous frame is taken as an end point of the local loop closure path. A feasible path for selection by the user is generated according to the start point of the local loop closure path and the end point of the local loop closure path.

According to some alternative embodiments of the present disclosure, the second position is not on a target path; wherein the target path is a path that the scanning device passes through a target position at least once, and the target position is a position other than the start position and a position of which the distance from the start position is the target distance.

As some alternative embodiments of the present disclosure, the predicted end point of the local loop closure path should not be the start position or a position near the start position, and the predicted end point of the local loop closure path should be a frame which has not formed a local loop closure, i.e. a position where a frame not marked as a loop closure frame is located. Only when the conditions above are met, will a feasible local loop closure path be predicted for selection by the user.

In some alternative embodiments of the present disclosure, in the process of localization and mapping, in response to detecting the generation of the local loop closure path, all frames in the detected local loop closure path are marked as loop closure frames; and when the scanning device finishes scanning, if it is detected that there is a frame other than the loop closure frames, the prompt information is generated.

As some other alternative embodiments of the present disclosure, in the process of the simultaneous localization and mapping, if the local loop closure is generated, all frames in the local loop closure are marked as loop closure frames; and when finally ending scanning by the user, if it is also found that there are frames that have not formed a loop closure, that is, a plurality of local loop closures have been formed but a global loop closure has not been generated, then the user is prompted: there are some areas that have not formed a loop closure, do you want to end the scanning? When the user desires a more accurate simultaneous localization and mapping result, the user can complete the loop closure according to the generated loop closure prediction path.

Fig. 2 is a schematic diagram of difference between the existence of loop closure optimization and the absence of loop closure optimization according to embodiments of the present disclosure. As shown in Fig. 2, the meaning of loop closure detection is: it is concerned with the correctness of an estimated trajectory and map in a long time, which can improve the correlation between current data and all historical data, so that relocalization can be performed by using loop closure detection.

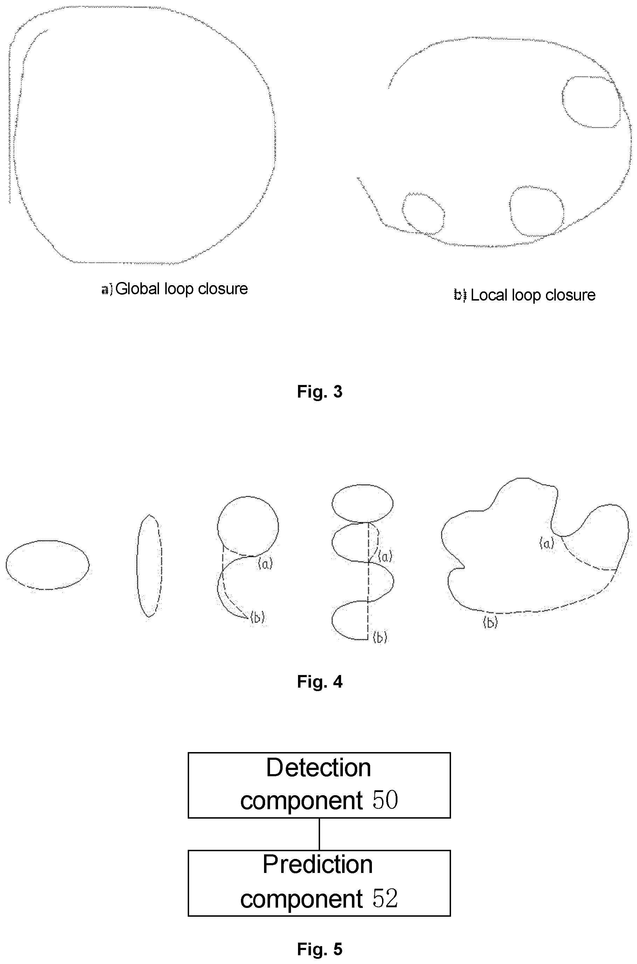

Fig. 3 is a structural diagram of a global loop closure and a local loop closure according to embodiments of the present disclosure. As shown in Fig. 3, a loop closure may be global and may also be local, and a local loop closure pair may optimize the pose of local frames, but may not optimize frames that have not formed a loop closure. The global loop closure is a loop closure formed when the scanner passes through the start position or a position near the start position for the second time, and the local loop closure is a loop closure formed when the scanner passes through a same position for the second time, but the same position is not the start position or the position near the start position.

Fig. 4 is a schematic diagram of a global loop closure path and a local loop closure path according to embodiments of the present disclosure. As shown in Fig. 4, the predicted loop closure paths are classified into a global loop closure path and a local loop closure path; wherein point b represents a start position at which the scanner starts working, and a frame at the start position may be referred to as the earliest frame; and point a represents a position at a set distance from the position of the current frame, and a frame on the point a is not marked as a loop closure frame, that is, the point a is not on the local loop closure path. The solid line indicates a current path, and the dotted line indicates the predicted loop closure path.

As some alternative embodiments of the present disclosure, after the loop closure path is predicted in step S104, the loop closure path may also be displayed; and/or the scanning device is controlled to move according to the loop closure path.

In some alternative embodiments of the present disclosure, a predicted feasible loop closure path is displayed on a display interface, and the user can select, according to the predicted feasible loop closure path, whether to perform loop closure so as to obtain a more accurate result of simultaneous localization and mapping.

As some other alternative embodiments of the present disclosure, the scanner can be installed on an unmanned vehicle or an unmanned aerial vehicle, and can automatically move in a large-scale scene (for example, scenes on the order of hundreds of meters such as an underground parking lot, a road, a staircase, a room, a whole building, and a residence community). Loop closure paths determined previously may be transmitted to the unmanned vehicle or the unmanned aerial vehicle, and according to the loop closure paths determined previously, the unmanned vehicle or the unmanned aerial vehicle may automatically plan a path to travel, so that the scanning device moves according to the loop closure path.

As some other alternative embodiments of the present disclosure, after the loop closure path is predicted in step S104, while the loop closure path is displayed, the scanning device is controlled to move according to the loop closure path.

In some alternative embodiments of the present disclosure, after the loop closure path is predicted in step S104, the scanner sends a prompt message after displaying the loop closure path, and after receiving a confirmation message fed back by the user, the scanning device is controlled to move according to the loop closure path.

Fig. 5 is a structural diagram of an apparatus for predicting a loop closure path according to embodiments of the present disclosure. As shown in Fig. 5, the apparatus includes:
a detection component 50, configured to detect, in the process of simultaneous localization and mapping, whether a scanning movement trajectory of a scanning device has not passed through a start position on a scanning path for a second time within a preset duration.

According to some alternative embodiments of the present disclosure, simultaneous localization and mapping is a concept: a robot is expected to start from an unknown place in an unknown environment, position and posture of the robot itself are localized in a motion process by repeatedly observed map features (such as wall corners, columns, etc.), and then a map is constructed in an incremental manner according to the position of the robot itself, thereby achieving the purpose of simultaneous localization and mapping. Detecting whether the scanning device has passed through the start position on the scanning path for the second time is loop closure detection in the process of localization and mapping. The loop closure detection judges whether the robot has returned to a previously passed position, and if loop closure is detected, the robot transfers information to a backend for optimization processing. In visual synchronous localization and mapping, estimation of a pose is usually a recursive process, i.e. the current frame pose is solved by a previous frame pose, so the error therein is transferred in this way frame by frame, i.e. cumulative error commonly referred to. One effective method to eliminate the error is to perform loop closure detection. The loop closure is a more compact and accurate constraint than the back end, and this constraint condition can form a topology-consistent trajectory map. If a closed loop can be detected and optimized, the result can be made more accurate.

The loop closure detection includes, but is not limited to, the following methods:
1. Loop closure is detected by pictures: a loop closure detection method, which is popular in a current synchronous localization and mapping system, is a method of combining feature points with bag-of-words. A bag-of-words-based method includes: a bag-of-words trie is pre-loaded, and the pre-loaded trie is notified of converting a descriptor of each local feature point in an image into a word, wherein the dictionary contains all the words; and a bag-of-words vector is calculated for words of the whole image, wherein a distance between bag-of-words vectors represents the difference between two images. In an image retrieval process, key frames having the same words as the current frame are first found by using an inverted index method; and similarities between the key frames and the current frame are calculated according to bag-of-words vectors of the key frames, image frames with insufficient similarities are eliminated, and the remaining key frames are taken as candidate key frames, and the candidate key frames are sorted from near to far according to the distances of the bag-of-words vectors. A visual feature descriptor is highly related to environmental appearance. The appearance is greatly affected by illumination, and changes over time; therefore, a visual feature map usually has a short time effect.
2. Laser synchronous localization and mapping, in which loop closure detection is performed for a point cloud: first, Scan Context/LiDAR Iris is used for performing loop closure frame detection, and after loop closure frames in historical frames are determined, point cloud registration is performed between the loop closure frames and a current point cloud frame to acquire a precise loop closure pose. The essence of loop closure detection is to perform similarity detection between a current point cloud and historical point clouds, and if there is a corresponding point cloud having a relatively high similarity in the historical point clouds, this historical frame will be determined as a loop closure frame, and registration is performed between the current point cloud and the historical frame so as to obtain a precise pose; and due to the existence of cumulative error, a laser odometer continuously calculates that there is a certain deviation between the pose of the current moment and the pose of the historical moment, whereas the loop closure detection does not have a cumulative error.
3. A global positioning system is used to assist in loop closure detection: according to information provided by the global positioning system, the distance between the current position and the position of a previous frame i is judged; if the distance is less than a set threshold, similarity detection is performed on the current frame and the ith frame; and if the similarity is greater than a certain threshold, the ith frame is determined as a loop closure frame.

A prediction component 52, configured to predict a loop closure path when it is detected that the scanning movement trajectory of the scanning device has not passed through the start position for the second time within the preset duration.

According to some alternative embodiments of the present disclosure, simultaneous localization and mapping is a concept: a robot is expected to start from an unknown place in an unknown environment, position and posture of the robot itself are localized in a motion process by repeatedly observed map features (such as wall corners, columns, etc.), and then a map is constructed in an incremental manner according to the position of the robot itself, thereby achieving the purpose of simultaneous localization and mapping. Detecting whether the scanning device has passed through the start position on the scanning path for the second time is loop closure detection in the process of localization and mapping. The loop closure detection judges whether the robot has returned to a previously passed position, and if loop closure is detected, the robot transfers information to a backend for optimization processing. In visual synchronous localization and mapping, estimation of a pose is usually a recursive process, i.e. the current frame pose is solved by a previous frame pose, so the error therein is transferred in this way frame by frame, i.e. cumulative error commonly referred to. One effective method to eliminate the error is to perform loop closure detection. The loop closure is a more compact and accurate constraint than the back end, and this constraint condition can form a topology-consistent trajectory map. If a closed loop can be detected and optimized, the result can be made more accurate.

The loop closure detection includes, but is not limited to, the following methods:
1. Loop closure is detected by pictures: a loop closure detection method, which is popular in a current synchronous localization and mapping system, is a method of combining feature points with bag-of-words. A bag-of-words-based method includes: a bag-of-words trie is pre-loaded, and the pre-loaded trie is notified of converting a descriptor of each local feature point in an image into a word, wherein the dictionary contains all the words; and a bag-of-words vector is calculated for words of the whole image, wherein a distance between bag-of-words vectors represents the difference between two images. In an image retrieval process, key frames having the same words as the current frame are first found by using an inverted index method; and similarities between the key frames and the current frame are calculated according to bag-of-words vectors of the key frames, image frames with insufficient similarities are eliminated, and the remaining key frames are taken as candidate key frames, and the candidate key frames are sorted from near to far according to the distances of the bag-of-words vectors. A visual feature descriptor is highly related to environmental appearance. The appearance is greatly affected by illumination, and changes over time; therefore, a visual feature map usually has a short time effect.
2. Laser synchronous localization and mapping, in which loop closure detection is performed for a point cloud: first, Scan Context/LiDAR Iris is used for performing loop closure frame detection, and after loop closure frames in historical frames are determined, point cloud registration is performed between the loop closure frames and a current point cloud frame to acquire a precise loop closure pose. The essence of loop closure detection is to perform similarity detection between a current point cloud and historical point clouds, and if there is a corresponding point cloud having a relatively high similarity in the historical point clouds, this historical frame will be determined as a loop closure frame, and registration is performed between the current point cloud and the historical frame so as to obtain a precise pose; and due to the existence of cumulative error, a laser odometer continuously calculates that there is a certain deviation between the pose of the current moment and the pose of the historical moment, whereas the loop closure detection does not have a cumulative error.
3. A global positioning system is used to assist in loop closure detection: according to information provided by the global positioning system, the distance between the current position and the position of a previous frame i is judged; if the distance is less than a set threshold, similarity detection is performed on the current frame and the ith frame; and if the similarity is greater than a certain threshold, the ith frame is determined as a loop closure frame.

In some alternative embodiments of the present disclosure, a predicted feasible loop closure path is displayed on a display interface, and the user can select, according to the predicted feasible loop closure path, whether to perform loop closure so as to obtain a more accurate result of simultaneous localization and mapping.

It should be noted that, for preferred embodiments of the embodiment shown in Fig. 5, reference may be made to the related illustration of the embodiment shown in Fig. 1, and details will not be repeated herein.

Embodiments of the present disclosure further provide a non-transitory storage medium, including a stored program, wherein when running, the program controls a device where the storage medium is located to execute the described method for predicting a loop closure path.

The non-transitory storage medium executes a program of the following functions: in the process of simultaneous localization and mapping, it is detected whether a scanning movement trajectory of a scanning device has not passed through a start position on a scanning path for a second time within a preset duration; and a loop closure path is predicted when it is detected that the scanning movement trajectory of the scanning device has not passed through the start position for the second time within the preset duration.

Embodiments of the present disclosure further provide a processor, the processor being configured to run a program stored in a memory; wherein when running, the program executes the described method for predicting a loop closure path.

The processor is used for running to execute a program of the following functions: in the process of simultaneous localization and mapping, it is detected whether a scanning movement trajectory of a scanning device has not passed through a start position on a scanning path for a second time within a preset duration; and a loop closure path is predicted when it is detected that the scanning movement trajectory of the scanning device has not passed through the start position for the second time within the preset duration.

The serial numbers of the embodiments of the present disclosure are only for illustration, and do not represent the preference of the embodiments.

In the embodiments of the present disclosure, the illustration of each embodiment has its own emphasis. For the part not detailed in a certain embodiment, please refer to the relevant illustration in other embodiments.

In the several embodiments provided in the present disclosure, it should be understood that the disclosed technical content may be implemented in other manners. The apparatus embodiments described above are merely illustrative. For example, the division of a unit is only a logical function division, and in actual implementation, there may be another division manner, for example, multiple units or assemblies may be combined, or can be integrated into another system, or some features can be ignored or not executed. In addition, the coupling or direct coupling or communication connection shown or discussed may be an indirect coupling or communication connection through some interfaces, units or components, and may be electrical or other forms.

Units described as separate components may or may not be physically separated, and the components displayed as units may or may not be physical components, that is, may be located in one place, or may be distributed in a plurality of network units. Some or all of the units may be selected according to actual needs to achieve the purpose of the solutions of the embodiments.

In addition, various functional units in the embodiments of the present disclosure may be integrated in one processing unit, or each unit may physically present separately, or two or more units may be integrated in one unit. The integrated unit may be implemented in the form of hardware, or may be implemented in the form of a software functional unit.

If the integrated unit is implemented in the form of a software functional unit and is sold or used as an independent product, the integrated unit can be stored in a computer-readable storage medium. On the basis of such understanding, the part of the technical solution of the present disclosure that contributes in essence or to the related art or all or part of the technical solution may be embodied in the form of a software product stored in a storage medium. Several instructions are included in the storage medium to enable a computer device (which may be a personal computer, server or network device, etc.) to execute all or some of the steps of the methods of various embodiments of the present disclosure. Moreover, the storage medium above includes: media such as a USB flash disk, a Read-Only Memory (ROM), a Random Access Memory (RAM), a removable hard disk, a magnetic disk, or an optical disk which can store program codes.

The content above only relates to preferred embodiments of the present disclosure. It should be noted that for a person of ordinary skill in the art, several improvements and modifications can also be made without departing from the principle of the present disclosure, and these improvements and modifications shall also be considered as within the scope of protection of the present disclosure.

### Industrial Applicability

The solutions provided in the embodiments of the present disclosure can be applied to the technical field of loop closure detection. In the embodiments of the present disclosure, by using a method in which in the process of simultaneous localization and mapping, it is detected whether a scanning movement trajectory of a scanning device has not passed through a start position on a scanning path for a second time within a preset duration; and a loop closure path is predicted when it is detected that the scanning movement trajectory of the scanning device has not passed through the start position for the second time within the preset duration, by predicting the loop closure path and generating prompt information, the purpose of prompting a user to complete loop closure detection is achieved, thereby acquiring a more accurate result of simultaneous localization and mapping.

## Claims

**1.** A method for predicting a loop closure path, comprising:
detecting, in a process of simultaneous localization and mapping, whether a scanning movement trajectory of a scanning device has not passed through a start position on a scanning path for a second time within a preset duration; and
predicting a loop closure path when it is detected that the scanning movement trajectory of the scanning device has not passed through the start position for the second time within the preset duration.

**2.** The method as claimed in claim 1, wherein the method further comprises: generating prompt information when it is detected that the scanning movement trajectory of the scanning device has not passed through the start position for the second time within the preset duration.

**3.** The method as claimed in claim 2, wherein predicting the loop closure path, comprises:
predicting at least one of: a first loop closure path and a second loop closure path; wherein the first loop closure path is a global loop closure path, and the second loop closure path is a local loop closure path.

**4.** The method as claimed in claim 3, wherein predicting the first loop closure path, comprises:
acquiring a first position of the scanning device corresponding to a current frame, and taking the first position as a first end point of the first loop closure path; wherein the current frame is a corresponding frame when the scanning device generates the prompt information in the scanning process;
acquiring the start position, and taking the start position as a second end point of the first loop closure path; and
generating the first loop closure path according to the first end point and the second end point of the first loop closure path.

**5.** The method as claimed in claim 4, wherein predicting the second loop closure path, comprises:
taking the first position as a first end point of the second loop closure path;
acquiring a second position of which the distance from the first position is a target distance, and
taking the second position as a second end point of the second loop closure path; and
generating the second loop closure path according to the first end point and the second end point of the second loop closure path.

**6.** The method as claimed in claim 5, wherein the second position is not on a target path; wherein the target path is a path that the scanning device passes through a target position at least once, and the target position is a position other than the start position and a position of which the distance from the start position is the target distance.

**7.** The method as claimed in claim 3, wherein the method further comprises:
in the process of the simultaneous localization and mapping, in response to detecting the generation of the local loop closure path, marking all frames in the detected local loop closure path as loop closure frames; and
when the scanning device finishes scanning, in response to detecting that there is a frame other than the loop closure frames, generating the prompt information.

**8.** The method as claimed in any one of claims 1-7, wherein after predicting the loop closure path, the method further comprises:
displaying the loop closure path; and/or
controlling the scanning device to move according to the loop closure path.

**12.** An apparatus for predicting a loop closure path, comprising:
a detection component, configured to detect, in the process of simultaneous localization and mapping, whether a scanning movement trajectory of a scanning device has not passed through a start position on a scanning path for a second time within a preset duration; and
a prediction component, configured to predict a loop closure path when it is detected that the scanning movement trajectory of the scanning device has not passed through the start position for the second time within the preset duration.

**10.** A non-transitory storage medium, comprising a stored program; wherein when running, the program controls a device where the non-transitory storage medium is located to execute the method for predicting a loop closure path as claimed in any one claims 1-8.

**11.** A processor, the processor being configured to run a program stored in a memory; wherein when running, the program executes the method for predicting a loop closure path as claimed in any one claims 1-8.
